# EUROPEAN PATENT SPECIFICATION

(11) **EP 4 083 776 B1**
(45) Date of publication and mention of the grant of the patent: **09.04.2025**
(21) Application number: 22153412.6
(22) Date of filing: 26.01.2022
(51) Int. Cl.: G06F 3/06

(54) **SYSTEMS, METHODS, DEVICES, AND APPARATUSES FOR ADAPTIVE NEAR STORAGE COMPUTATION**
SYSTEME, VERFAHREN, VORRICHTUNGEN UND GERÄTE ZUR ADAPTIVEN NAHSPEICHERBERECHNUNG
SYSTÈMES, PROCÉDÉS, DISPOSITIFS ET APPAREILS DE CALCUL DE STOCKAGE PROCHE ADAPTATIF

(30) Priority: 27.04.2021 US 202163180637 P; 01.07.2021 US 202117366020
(43) Date of publication of application: 02.11.2022
(73) Proprietor: Samsung Electronics Co., Ltd., Suwon-si, Gyeonggi-do 16677 (KR)
(72) Inventor: DAOUD, Luka Bushra Koddous, San Jose, CA, 95134 (US); LAGRANGE MOUTINHO DOS REIS, Veronica, San Jose, CA, 95134 (US)
(74) Representative: Kuhnen & Wacker Patent- und Rechtsanwaltsbüro PartG mbB

(56) References cited:
- US-A1- 2019 065 052
- US-A1- 2020 133 533

## Description

### TECHNICAL FIELD

This disclosure relates generally to data storage, and more specifically to systems, methods, devices, and apparatuses for adaptive near storage computation.

### BACKGROUND

In some embodiments, a computational storage device may perform one or more computations on data received from a host. This may enable the host to offload computations to the storage device to reduce a workload on the host. For example, a host may offload tasks such as data compression, database queries, and/or the like, to a computational storage device
The above information disclosed in this Background section is only for enhancement of understanding of the background of the invention and therefore it may contain information that does not constitute prior art.

US 2020/133533 A1 discloses: A method of processing data, comprising determining whether an event triggering processing of data at a storage device occurs, the data being predetermined to be processed at a computing device associated with the storage device; in response to determining that the event occurs, determining available resources of the storage device; and in response to an amount of the available resources exceeding a first predetermined threshold, causing the storage device to process the data and provide the processed data to the computing device.

US 2019/065052 A1 discloses: Devices and techniques for efficient allocation of storage connection resources. An active trigger for a storage device is received when the storage device is in an idle state. A workload that corresponds to the storage device is measured to determine that the workload meets a threshold. Connection parameters, for a connection to the storage device, are negotiated based on the workload in response to receipt of the active trigger and the workload meeting the threshold. The workload is then executed on the storage device via the connection using the connection parameters.

### SUMMARY

The present invention is defined in the independent claims. Specific embodiments are defined in the dependent claims.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a system with adaptive near storage computation in accordance with example embodiments of the disclosure.
Fig. 2 illustrates an example embodiment of an adaptive computational storage device in accordance with example embodiments of the disclosure.
Fig. 3 illustrates an example embodiment of a storage read method with near storage decompression in accordance with example embodiments of the disclosure.
Fig. 4 illustrates an example embodiment of a storage write method with near storage compression in accordance with example embodiments of the disclosure.
Fig. 5 illustrates an example embodiment of a method for a host to track a read operation with near storage decompression and a write operation with near storage compression in accordance with example embodiments of the disclosure.
Fig. 6 illustrates an example embodiment of a method for a host to track a read operation with near storage decompression in accordance with example embodiments of the disclosure.
Fig. 7 illustrates an example embodiment of a method for a host to track a write operation with near storage decompression in accordance with example embodiments of the disclosure.
Fig. 8 illustrates an embodiment of a system having a switch and multiple adaptive computational storage devices in accordance with example embodiments of the disclosure.
Fig. 9 illustrates an embodiment of an adaptive near storage computation method in accordance with example embodiments of the disclosure.

### DETAILED DESCRIPTION

Near storage computation may involve the use of computational resources at or near a storage device. This may enable a host to offload computations and/or other operations to a storage device so they may be performed on data received at, stored in, and/or sent from, the storage device. Depending on the implementation details, near storage computation may reduce or minimize I/O operations and/or conserve resources such as bus and/or network bandwidth, host memory capacity, host CPU capacity, and/or the like. Near storage computation may also accelerate overall application performance, for example, data transfer rates (e.g., MB/s), database queries per hour (QPH), response times, and/or the like.

However, depending on the implementation details and dynamic system conditions, it may be more efficient to execute a computation at the host rather than near a storage device. For example, a storage device may store data in a compressed state to reduce the amount of storage space used to store a file or other unit of data. If a host compresses data for an application before writing it to a storage device, it may reduce the amount of data transferred over a bus (e.g., increase the bus bandwidth available for other applications), but it may increase the host CPU load and/or memory usage required to store both the compressed and uncompressed versions of the data (e.g., reduce the CPU clock cycles and/or memory available for other applications). Similarly, when the data is read from the storage device, decompressing the data at the host may reduce the amount of data transferred over a bus but increase the host CPU load.

If, however, the host offloads the compression and/or decompression to the storage device, it may increase the amount of data transferred over the bus (e.g., reduce the bus bandwidth available for other applications), but it may reduce the host CPU load (e.g., increase the CPU clock cycles available for other applications).

Thus, deciding whether to perform a computation at a host or near storage may involve tradeoffs between various performance parameters. These parameters may include current loads such as host CPU/memory load, the saturation point of the bus, system priorities, and/or the like. Moreover, one or more of these parameters may be dynamic (e.g., changing over time, possibly even after a host has sent a storage access request with a command instructing the storage device to perform an operation).

A near storage computation scheme in accordance with example embodiments of the disclosure may adaptively determine, at or near a storage device, whether to perform an operation near storage or at a host. For example, a computational storage device may include a near storage monitor (NSM) that may receive system performance information collected by the host and local performance information collected by the storage device. The NSM may use this information to decide whether to perform an operation (e.g., a computation) at the storage device or at the host. Thus, the determination may be delegated to the storage device to enable the storage device to adaptively perform an operation.

Examples of operations may include database operations such as scans, joins, query planning, cost function calculations, and/or the like, compression and/or decompression computations, and/or the like. Examples of system and/or local performance information may include central processing unit (CPU) usage, memory usage, input and/or output (I/O) loads, network traffic loads, and/or the like. Thus, in some embodiments, an NSM may adaptively decide where to perform an operation in a manner that may improve or optimize the overall system performance.

In some cases, an NSM may make a decision based only on local performance information, for example, if some or all of the system performance information is not available.

In some embodiments in accordance with example embodiments of the disclosure, an NSM may decide on a hybrid and/or a dynamic operation. For example, an NSM may enable a host and a storage device to work collaboratively in a hybrid arrangement by splitting one or more operations between the host and the storage device. As another example, an NSM may dynamically change a decision to perform an operation at the storage device, and/or an allocation of work between a host and the storage device, based on one or more changes in the system performance information, the local performance information, or both.

In some embodiments in accordance with example embodiments of the disclosure, a determination by an NSM may also be based on a status received from a host. Any number and/or types of statuses and/or status states may be implemented. For example, in some embodiments, a host may send a status having one of three states. A first state may indicate that a device should perform an operation associated with a request sent by the host regardless of other considerations. This state may be referred to as ALWAYS, or another term may be used to refer to a similar state. A second state may indicate that the device should not perform an operation associated with a request sent by the host regardless of other considerations. This state may be referred to as NEVER, or another term may be used to refer to a similar state. A third state may indicate that the device should adaptively determine whether to perform an operation associated with a request sent by the host based on information available to the device such as local and/or system performance information. This state may be referred to as ADAPT, or another term may be used to refer to a similar state.

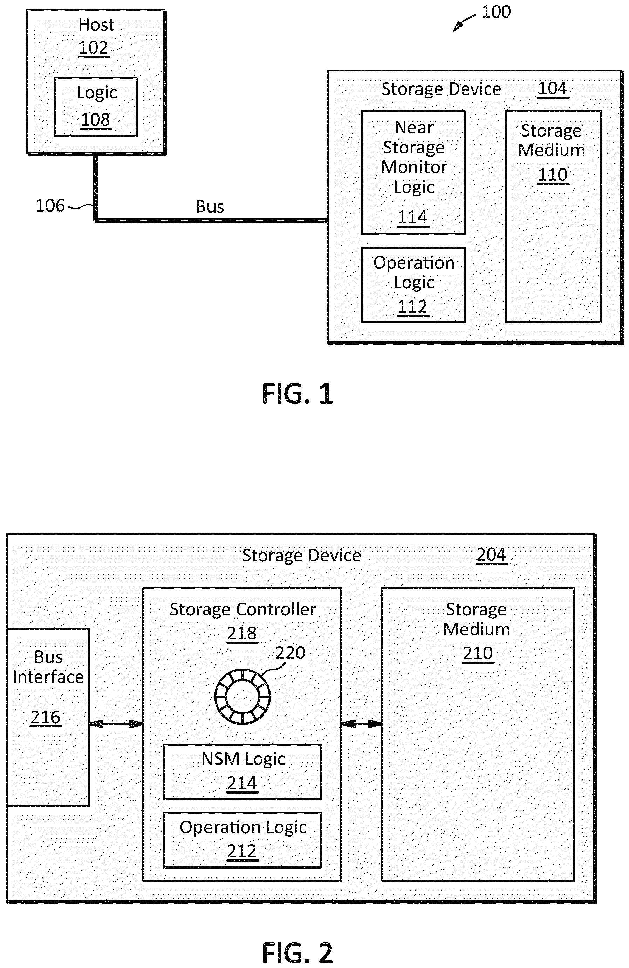

Fig. 1 illustrates an embodiment of a system with adaptive near storage computation in accordance with example embodiments of the disclosure. The system 100 illustrated in Fig. 1 may include a host 102 and an adaptive computational storage device 104 that may be arranged to communicate through a bus 106. The host 102 may include host logic 108 configured to implement one or more adaptive features as disclosed herein. The adaptive computational storage device 104 may include a storage medium 110, operation logic 112, and NSM logic 114.

In some embodiments, the NSM logic 114 may be configured to implement any of the adaptive near storage computation features disclosed herein. For example, the NSM logic 114 may collect information on one or more local performance parameters (e.g., performance counters, metrics, and/or the like) of the adaptive computational storage device 104 such as the load levels of one or more device queues (e.g., block device queues, Nonvolatile Memory Express (NVMe) queues, and/or the like), available memory resources, available processing resources, and/or the like. The NSM logic 114 may use this information to decide whether to perform an operation at the storage device. For example, in some embodiments, the NSM logic 114 may use the collected performance information to determine a local score for the storage device. The local score may indicate, for example, how busy the storage device may be. The NSM logic 114 may apply the local score as an input to an evaluation function that may implement one or more equations, policies, priorities, and/or the like to decide whether to perform an operation at the storage device.

In some embodiments, the NSM logic 114 may also use system performance information received from the host 102 as a monitor score argument (e.g., based on environmental conditions) to decide whether to perform an operation at the storage device. For example, the host 102 may collect information on one or more performance parameters of the system 100 such as the host CPU load, the host memory load, the saturation point of the bus, system priorities, and/or the like. In some embodiments, the host logic 108 may use the collected system performance information to determine a monitor score which may be sent to the NSM logic 114, for example in association with a storage access request. The monitor score may indicate, for example, how busy the host and/or other system components may be. In some embodiments, system performance information may include performance information for any one or more components external to the adaptive computational storage device 104.

The NSM logic 114 may apply the monitor score as an additional input to an evaluation function. For example, in some embodiments in which the monitor score and local score are implemented as numerical values, an evaluation function may compare one or both of the monitor score and the local score to a threshold. The decision whether to perform an operation associated with a request may depend on whether one or both of the monitor score and the local score exceeds the threshold.

In some embodiments, a monitor score may be implemented on a numerical scale, for example, from 1.0 to 10.0 where 1.0 may indicate not busy (e.g., zero percent capacity), and 10.0 may indicate completely busy (e.g., 100 percent capacity). In one example embodiment, a host may be concerned primarily with CPU usage. If the host has a CPU with ten cores, and all ten cores are zero percent busy, the host may set a monitor score to 1.00. If all ten cores are 50 percent busy, the host may set the monitor score to 5.00. If five of the cores are zero percent busy and five of the cores are 100 percent busy, the host may also set the monitor score to 5.00. In some embodiments, a monitor score may be set on a sliding scale, for example, according to one or more host priorities.

In some embodiments, a monitor score and/or local score may be implemented with one or more weighted components. For example, some applications may be sensitive to memory usage, so a memory load may be weighted more heavily than other performance parameters when determining a monitor or local score for such an application. As another example, in an embodiment with a server having a relatively low number of CPU cores, CPU usage may be most likely to cause a performance bottleneck. Therefore, a CPU load may be weighted more heavily than other performance parameters when determining a monitor or local score for use with such a server.

Any performance parameters used to determine a monitor score and/or local score may be dynamic (e.g., time dependent), environment dependent, technology dependent, and/or the like. Thus, in some embodiments, the host logic 108 and/or the NSM logic 114 may dynamically change the monitor score and/or local score to track any of these changes. For example, in some situations, a system load may change between the time a host issues a command and the time a storage device executes the command. In some embodiments, the NSM logic 114 may implement an evaluation function that may account for dynamic load changes. In some embodiments, an evaluation function may be implemented using any type of analytical functions, heuristics (including AI), and/or the like.

In some embodiments, the host 102 and the NSM logic 114 may implement one or more hybrid techniques for performing one or more operations at an adaptive computational storage device. For example, rather than the storage device 104 performing all or none of an operation, the work may be split between the host 102 and the storage device 104, for example, with each performing 50 percent of the work (a 50/50 split), subject to the NSM deciding to perform its 50 percent. Moreover, the hybrid work split may also be dynamic such that, based on changing system monitor scores and/or local scores, the split may change to, for example, 70/30.

In some embodiments, a different combination of one or more performance parameters may be used to determine a monitor score and/or local score depending on an application that may be supported by the system 100 and/or adaptive computational storage device 104. For example, online analytical processing (OLAP) workloads may be more sensitive to response times (e.g., latencies), and thus, a monitor score and/or local score used for an OLAP application may be based entirely on, or weighted in favor of, system and/or device latencies. As another example, online transaction processing (OLTP) workloads may be more sensitive to bandwidths (e.g., queries/hour), and thus, a monitor score and/or local score used for an OLTP application may be based entirely on, or weighted in favor of, system and/or device bandwidths.

In some embodiments, the NSM logic 114 may also use a status received from the host 102 as to determine whether to perform an operation at the storage device. For example, a host may send a status having one of three states such as ALWAYS, NEVER, or ADAPT or similar states, or any other numbers and/or types of states as described above. If the status is ALWAYS, the storage device may always perform an operation associated with a request by the host. If the status is NEVER, the storage device may never perform an operation associated with a request. If the status is ADAPT, the decision may be delegated to the NSM logic 114 at the storage device. For example, the NSM logic 114 may decide whether to perform near storage compression and/or decompression according to a policy based on the current condition of the system that may be provided as a monitor score.

Although the principles are not limited to any specific implementation details, in some example embodiments, a host may communicate a status and/or monitor score to a storage device through one or more optional arguments that may be added to an existing storage read and/or write command. The following are example embodiments of read and write commands that may be used by a host to request file read and write operations, respectively, by a computational storage device having data compression and/or decompression capabilities:
*C_READ (fd, buffer, ..., [STATUS, monitor_score]);*
*C_ WRITE(fd, buffer, ..., [STATUS, monitor_score]);*
where fd may indicate a file descriptor, and buffer may indicate the address of a buffer to use for the file operation.

In this example embodiment, the argument STATUS may have one of three valid values: ALWAYS, NEVER, or ADAPT which may be implemented as described above. The argument monitor_score may be implemented, for example, as a numerical value based on one or more (possibly weighted) system performance parameters as described above.

In some embodiments, a command to request a file read and/or write operation by a storage device may provide a return status that may indicate, for example, whether a near storage operation is complete, an error status, and/or the like.

In some embodiments, rather than adapting an existing command to include one or more arguments related to adaptive near storage computation, one or more new standard and/or custom commands may be defined.

In some embodiments, a status, monitor score, and/or the like may be given precedence, priority, greater or complete weight, and/or the like. Such an embodiment may be based on a system configuration in which the host may have access to better overall performance information, and therefore, may be described as "the host knows best." For example, in some embodiments, the ALWAYS, NEVER, or ADAPT values of the status may be obeyed absolutely by the storage device. In other embodiments, NSM logic may be given precedence, priority, greater or complete weight, and/or the like. For example, a storage device may use the status values and/or monitor score as suggestions or starting points. In yet other embodiments, an intervening component such as a switch located between the host and the storage device may be given precedence, priority, greater or complete weight, and/or the like.

In some embodiments, checking the load of an I/O queue at a storage device may be a beneficial basis for determining a local score because, depending on the details, it may be implemented as a lightweight check that the storage device may be able to implement completely internally. In such an embodiment, an I/O queue may be checked, for example, for the number of read and/or write requests that may be pending as a measure of how busy the storage device is.

In some example embodiments, for a direct attached storage device, any number of the following parameters (e.g., performance counters) may be used by a host and/or an NSM to determine a monitor score or local score: CPU usage; memory usage; pending processes; priorities of pending processes; swap space usage (e.g., a percentage of virtual memory that is currently being used to temporarily store inactive pages from main physical memory); I/O statistics (e.g., block reads per second and/or block writes per second); I/O wait time (e.g., an amount of time a CPU may spend waiting for an I/O operation to complete); network traffic bandwidth used by each process and/or application; and/or the like.

In some example embodiments, for a network attached storage device, any number of the following parameters (e.g., performance counters) may be used by a host and/or an NSM to determine a monitor score or local score: traffic monitors (e.g., IP traffic monitors) that pass over a network; processes running on a specific port; database statistics of one or more local or remote servers; network traffic activity; and/or the like.

In some embodiments, and depending on the implementation details, adaptive near storage computation may improve the overall system performance and/or the total cost of ownership (TCO) for a storage system. For example, in some embodiments, a decision whether to perform an operation at a computational storage device or the host may be made at the host. However, making this decision at the host may involve sending information on local performance parameters from the storage device to the host which may increase bus traffic. In some embodiments, the host may have multiple attached storage devices which may multiply the amount of bus traffic used to send local performance parameters to the host. Thus, the communication channel between the host and the storage devices may form a bottleneck. Moreover, having multiple storage devices may add to the decision making burden on the host. Thus, implementing decision making at one or more storage devices may reduce bus traffic and/or distribute the decision making burden to multiple devices having processing resources.

Referring again to Fig. 1, the adaptive computational storage device 104 may be implemented with any type of storage device based on any type of storage medium 110 including magnetic media, solid state media, optical media, and/or the like. For example, in some embodiments, the adaptive computational storage device 104 may be implemented as a solid state drive (SSD) based on not-AND (NAND) flash memory, persistent memory such as cross-gridded nonvolatile memory, memory with bulk resistance change, and/or the like, and/or any combination thereof. The adaptive computational storage device 104 may be implemented in any form factor such as 3.5 inch, 2.5 inch, 1.8 inch, M.2, Enterprise and Data Center SSD Form Factor (EDSFF), NF1, and/or the like, using any connector configuration such as Serial ATA (SATA), Small Computer System Interface (SCSI), Serial Attached SCSI (SAS), U.2, and/or the like. The adaptive computational storage device 104 may be implemented entirely or partially with, and/or used in connection with, a server chassis, server rack, dataroom, datacenter, edge datacenter, mobile edge datacenter, and/or any combinations thereof, and/or the like.

Although the embodiment illustrated in Fig. 1 is shown with a single host 102 and a single adaptive computational storage device 104, any number of hosts 102 and/or storage devices 104 may be included, as well as one or more switches and/or other components configured to implement a storage system.

The operation logic 112 may implement any type of operation that may be performed by a computational storage device including database operations such as scans, joins, query planning, cost function calculations, and/or the like, compression and/or decompression computations, and/or the like.

The host logic 108, the operation logic 112, and/or the NSM logic 114 may be implemented with hardware, software, or any combination thereof including combinational logic, sequential logic, one or more timers, counters, registers, state machines, volatile memories such as dynamic random access memory (DRAM) and/or static random access memory (SRAM), nonvolatile memory such as flash memory including NAND flash memory, persistent memory such as cross-gridded nonvolatile memory, memory with bulk resistance change, and/or the like, and/or any combination thereof, complex programmable logic devices (CPLDs), field programmable gate arrays (FPGAs), application specific integrated circuits (ASICs), central processing units (CPUs) such as complex instruction set computer (CISC) processors such as x86 processors and/or reduced instruction set computer (RISC) processors such as ARM processors, graphics processing units (GPUs), neural processing units (NPUs), and/or the like, executing instructions stored in any type of memory. In some embodiments, one or more components may be implemented as a system-on-chip (SOC).

Although the host logic 108, the operation logic 112, and/or the NSM logic 114 may be illustrated as separate components, in some embodiments one or more of these components may be integrated into single components. Likewise, any of the host logic 108, the operation logic 112, and/or NSM logic 114 may be implemented with multiple components. For example, in some embodiments, the NSM logic 114 may be distributed between the storage device 104 and a switch that may be located between the storage device 104 and the host 102.

The bus 106 may be implemented with any type of interface and/or protocol including Peripheral Component Interconnect Express (PCIe), Nonvolatile Memory Express (NVMe), NVMe-over-fabric (NVMe-oF), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or combination thereof.

The host 102 may be implemented with any type of processing apparatus including, for example, one or more CPUs having any number of CPU cores, any type and/or amount of memory including volatile and/or nonvolatile memory, any number and/or type of bus interfaces, user interfaces, network interfaces, and/or the like, running any number and/or type of operating systems. The host 102 may be configured, for example, as one or more application servers, storage servers, and/or the like configured to run one or more user applications that may issue storage access requests for the adaptive computational storage device 104.

Fig. 2 illustrates an example embodiment of an adaptive computational storage device in accordance with example embodiments of the disclosure. The embodiment illustrated in Fig. 2 may be used, for example, to implement the storage device 104 illustrated in Fig. 1.

The storage device 204 illustrated in Fig. 2 may include a bus interface 216, a storage device controller 218, and a storage medium 210. The bus interface 216 may be implemented with any type of interface and/or protocol for an interconnect, network, and/or the like as described above. The storage device controller 218 may include NSM logic 214 and operation logic 212, as well as one or more command queues 220. The storage device controller 218 may also include one or more additional components that are not illustrated but may perform routine background management operations such as a flash translation layer (FTL), a flash interface, and/or the like that may perform garbage collection (GC), wear leveling, recovery from unsafe shutdowns, and/or the like for an embodiment that may use flash memory as the storage medium 210. In some embodiments, the bus interface 216 and storage device controller 218 may be implemented with hardware, software, or any combination thereof as described above with respect to the embodiment illustrated in Fig. 1.

For purposes of illustrating some principles of the disclosure, some example embodiments may be described in the context of an operation implemented as a compression and/or decompression operation. However, an operation may be implemented as any type of operation that may be performed by a computational storage device.

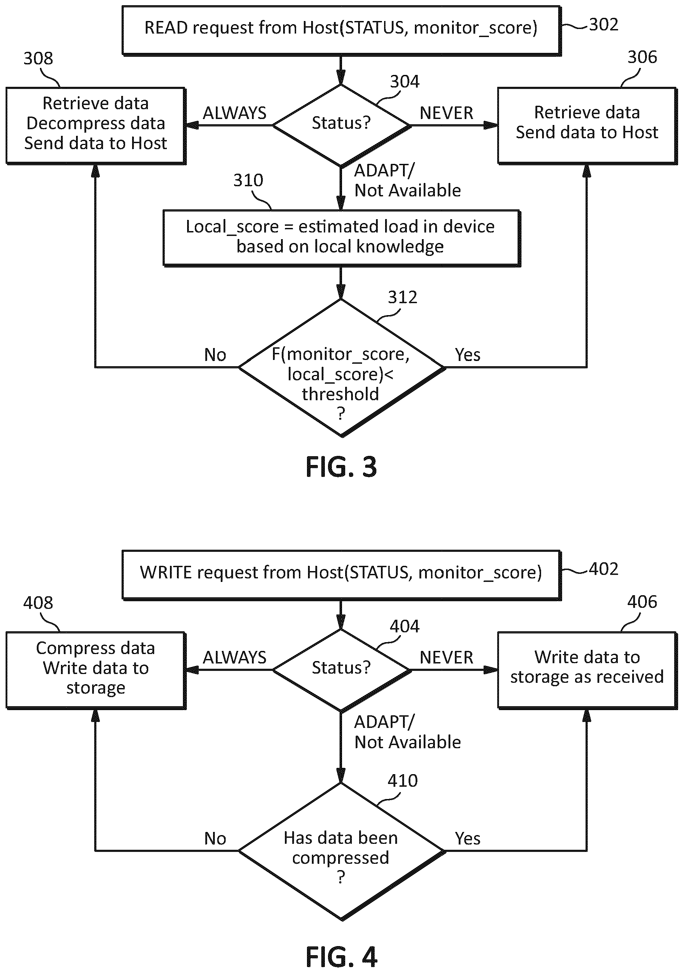

Fig. 3 illustrates an example embodiment of a storage read method with near storage decompression in accordance with example embodiments of the disclosure. For purposes of illustration, the embodiment illustrated in Fig. 3 may be described in the context of the system illustrated in Fig. 1. However, the embodiment illustrated in Fig. 3 may be implemented with any suitable system, apparatus, and/or devices including any of those disclosed herein. For purposes of illustration, the embodiment illustrated in Fig. 3 may be described in the context of an adaptive computational storage device 104 that may be configured to compress and/or decompress data received from and/or sent to the host 102, respectively, but the method may be applied to any other operation that may be performed by a computational storage device.

The method may begin at operation 302 at which an NSM logic 114 may receive a read request from the host 102 including the arguments STATUS and monitor_score. At operation 304, the method may determine the value of the STATUS argument. If the value of STATUS is NEVER, the method may proceed to operation 306 at which the adaptive computational storage device 104 may retrieve the requested data (e.g., file, block, key-value, and/or the like) and send it to the host 102 without decompressing the data. If the value of STATUS is ALWAYS at operation 304, the method may proceed to operation 308 at which the adaptive computational storage device 104 may retrieve the requested data, decompress the retrieved data, sent it to the host 102.

If the value of STATUS is ADAPT at operation 304, the method may proceed to operation 310 at which the NSM logic 114 may use collected knowledge of one or more local performance parameters of the adaptive computational storage device 104 to determine a local score (indicated as local_score). The method may then proceed to operation 312 at which the NSM logic 114 may apply the monitor score and local score as inputs to an evaluation function F which, for example, may determine a numerical value based on one or both of the monitor score and the local score. The numerical value determined by the evaluation function F may then be compared to a threshold. If the numerical value determined by the evaluation function F is less than the threshold, the NSM logic 114 may decide not to perform the decompression at the storage device 104. Thus, the method may proceed to operation 306 (Yes path) at which the adaptive computational storage device 104 may retrieve the requested data (e.g., file, block, key-value, and/or the like) and send it to the host 102 without decompressing the data.

If the numerical value determined by the evaluation function F is not less than the threshold, the NSM logic 114 may decide to perform the decompression at the storage device 104. Thus, the method may proceed to operation 308 (No path) at which the adaptive computational storage device 104 may retrieve and decompress the requested data and send it to the host 102 in decompressed form.

In some embodiments, and in some situations, the status and/or monitor score may not be available. For example, the host may not include the STATUS and/or monitor_score arguments with a read request. In some embodiments, if the status is not available, the NSM logic 114 may default to the ADAPT state and proceed through operations 310 and 312 using the monitor score as described above. In some embodiments, if both the status and monitor score are not available, the NSM logic 114 may default to the ADAPT state and proceed through operations 310 and 312 using only the local score as an input to the evaluation function F. In some embodiments, if the status is available but the monitor score is not available, the NSM logic 114 may proceed through any of the three branches of the method illustrated in Fig. 3 based on the value of STATUS, but using only the local score as an input to the evaluation function F.

In some embodiments, the method illustrated in Fig. 3 may have access to additional information about performance parameters for one or more additional components. For example, a switch may be located between the host 102 and the adaptive computational storage device 104. In some embodiments, the switch may provide an additional performance score that may be included in the evaluation function F. In some embodiments, the switch may intercept and modify a status and/or performance score sent from the host 102 to the adaptive computational storage device 104. In some embodiments, a monitor score may be implemented with one portion based on one or more performance parameters for the host 102, and another portion based on one or more performance parameters for the switch. In some embodiments, the NSM logic 114 may decide not to perform a decompression at the storage device 104 if the switch is busy and the host is not busy.

Fig. 4 illustrates an example embodiment of a storage write method with near storage compression in accordance with example embodiments of the disclosure. For purposes of illustration, the embodiment illustrated in Fig. 4 may be described in the context of the system illustrated in Fig. 1. However, the embodiment illustrated in Fig. 4 may be implemented with any suitable system, apparatus, and/or devices including any of those disclosed herein. For purposes of illustration, the embodiment illustrated in Fig. 4 may be described in the context of an adaptive computational storage device 104 that may be configured to compress and/or decompress data received from and/or sent to the host 102, respectively, but the method may be applied to any other operation that may be performed by a computational storage device.

The method may begin at operation 402 at which an NSM logic 114 may receive a write request from the host 102 including the arguments STATUS and monitor_score. At operation 404, the method may determine the value of the STATUS argument. If the value of STATUS is NEVER, the method may proceed to operation 406 at which the adaptive computational storage device 104 may write the received data (e.g., file, block, key-value, and/or the like) to the storage medium 110 without compressing the data. If the value of STATUS is ALWAYS at operation 404, the method may proceed to operation 408 at which the adaptive computational storage device 104 may compress the received data and write it in compressed form to the storage medium 110.

If the value of STATUS is ADAPT at operation 404, the method may determine if the write data sent from the host 102 is already compressed. For example, compressed data may be sent with a header that may include information about how the data was compressed. Thus, at operation 404, the NSM logic 114 may examine a header of the data sent by the host 102 to determine if the data is already compressed. If the data is already compressed, the method may proceed to operation 406 at which the adaptive computational storage device 104 may write the received data (e.g., file, block, key-value, and/or the like) to the storage medium 110 without performing a compression operation on the data. At operation 410, if the NSM logic 114 determines that the received data has not been compressed, the method may proceed to operation 408 at which the adaptive computational storage device 104 may compress the received data and write it in compressed form to the storage medium 110.

In some embodiments, if the write request illustrated at operation 402 is being used, it may indicate that a file is being stored in a compressed format. Thus, in some embodiments, the method illustrated in Fig. 4 may ensure that all write data received with the write request for a file is stored in compressed form, for example, to avoid one or more problems that may be encountered if a file is stored partially compressed and partially uncompressed.

In some embodiments, and in some situations, the status may not be available. For example, the host may not include the STATUS argument with a write request. In some embodiments, if the status is not available, the NSM logic 114 may default to the ADAPT state and proceed to operation 410.

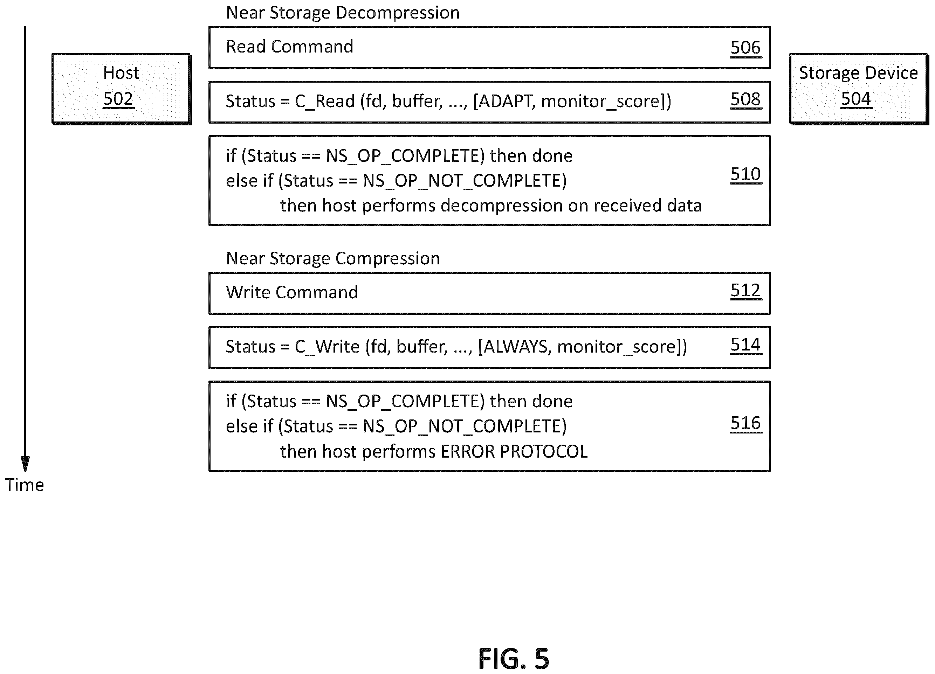

Fig. 5 illustrates an example embodiment of a method for a host to track a read operation with near storage decompression and a write operation with near storage compression in accordance with example embodiments of the disclosure.

For purposes of illustration, the embodiment illustrated in Fig. 5 may be described in the context of the system illustrated in Fig. 1. However, the embodiment illustrated in Fig. 5 may be implemented with any suitable system, apparatus, and/or devices including any of those disclosed herein. For purposes of illustration, the embodiment illustrated in Fig. 5 may be described in the context of an adaptive computational storage device 104 that may be configured to compress and/or decompress data received from and/or sent to the host 102, respectively, but the method may be applied to any other operation that may be performed by a computational storage device. In this example embodiment, the method illustrated in Fig. 5 may be performed, for example, from a point of view of the host 102. As shown in Fig. 5, time may progress in a downward direction.

For a read operation, the method may begin at operation 506 at which a host 502 may send a read command to an adaptive computational storage device 504. In some embodiments, the command may use any type of command convention, for example, a storage read/write command convention for an open source operating system. For example, a read command may have the following format
*C_READ (fd, buffer, ..., [ADAPT, monitor_score]);*
as described above. In this example, the host 502 may set the status to ADAPT so the storage device 504 may decide whether to perform a decompression operation on the data retrieved from the storage medium 110. The host 502 may further provide a monitor score (monitor_score) for the storage device 504 to use in deciding whether to perform the decompression operation at the storage device 504 or leave it for the host 502 to perform.

Because the host 502 may not know whether the adaptive computational storage device 504 has decided to perform the decompression at the storage device, the read command may be implemented to provide a return status that may indicate whether a near storage decompression operation has been performed. Thus, at operation 508, the adaptive computational storage device 504 may provide a return status that may be obtained, for example, as a return value for the read command. In some embodiments, the return value may be implemented as a Boolean value indicating whether the near storage decompression operation is complete (NS_OP_COMPLETE).

At operation 510, the host 502 may obtain the return value. If the return value indicates that the adaptive computational storage device 504 has performed the decompression operation (Status == NS_OP_COMPLETE), the method may terminate. If, however, the return value indicates that the adaptive computational storage device 504 has not performed the decompression operation (Status == NS_OP_NOT_COMPLETE), the host 502 may proceed to perform the decompression on the data returned from the storage device 504.

For a write operation, the method may begin at operation 512 at which the host 502 may send a write command to the adaptive computational storage device 504. As with the read command, the write command may use any type of command convention, for example, a write command may have the following format
*C_WRITE (fd, buffer, ..., [ALWAYS, monitor_score]);*
as described above. In this example, the host 502 may set the status to ALWAYS to indicate that the storage device 504 must perform a compression operation on the write data before storing it in the storage medium 110.

Because the host 502 may not know whether the adaptive computational storage device 504 has performed the decompression at the storage device, the write command may be implemented to provide a return status that may indicate whether a near storage compression operation has been performed. Thus, at operation 514, the adaptive computational storage device 504 may provide a return status that may be obtained, for example, as a return value for the write command. In some embodiments, the return value may be implemented as a Boolean value indicating whether the near storage compression operation is complete (NS_OP_COMPLETE).

At operation 516, the host 502 may obtain the return value. If the return value indicates that the adaptive computational storage device 504 has performed the compression operation (Status == NS_OP_COMPLETE), the method may terminate. If, however, the return value indicates that the adaptive computational storage device 504 has not performed the compression operation (Status == NS_OP_NOT_COMPLETE), the host 502 may perform an error protocol, for example, to retry the write operation, send the write data to a different adaptive computational storage device, and/or the like.

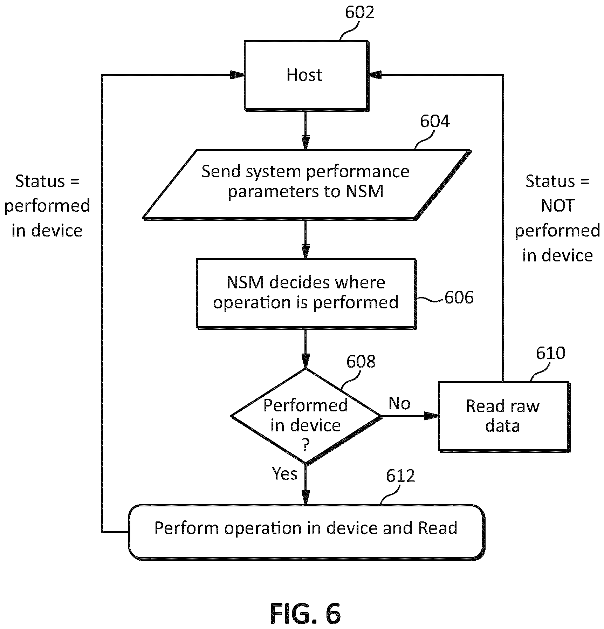

Fig. 6 illustrates an example embodiment of a method for a host to track a read operation with near storage decompression in accordance with example embodiments of the disclosure.

For purposes of illustration, the embodiment illustrated in Fig. 6 may be described in the context of the system illustrated in Fig. 1. However, the embodiment illustrated in Fig. 6 may be implemented with any suitable system, apparatus, and/or devices including any of those disclosed herein. For purposes of illustration, the embodiment illustrated in Fig. 6 may be described in the context of an adaptive computational storage device 104 that may be configured to compress and/or decompress data received from and/or sent to the host 102, respectively, but the method may be applied to any other operation that may be performed by a computational storage device. In this example embodiment, the method illustrated in Fig. 6 may be performed, for example, from a point of view of the host 102.

The method may be initiated by the host 102 at operation 602, for example, by sending a read request to an adaptive computational storage device 104. At operation 604, the host 102 may send information about one or more system performance parameters to the NSM logic 114 at the storage device 104. For example, the information may be in the form of a monitor score. At operation 606, the NSM logic 114 may decide whether to perform a decompression operation associated with the read request at the storage device 104. At operation 608, if the NSM logic 114 decides not to perform the decompression operation at the storage device 104, the method may proceed to operation 610 at which the storage device 104 may read the raw (uncompressed) data from the storage medium 110, send it to the host 102, and proceed back to operation 602 at which the host 102 may perform the decompression operation on the read data. The storage device may return a status value indicating that the decompression operation was not completed at the storage device.

However, at operation 608, if the NSM logic 114 decides to perform the decompression operation at the storage device 104, the method may proceed to operation 612 at which the storage device 104 may perform the decompression operation on the raw data and send the decompressed data to the host 102. The storage device may return a status value indicating that the decompression operation was completed at the storage device.

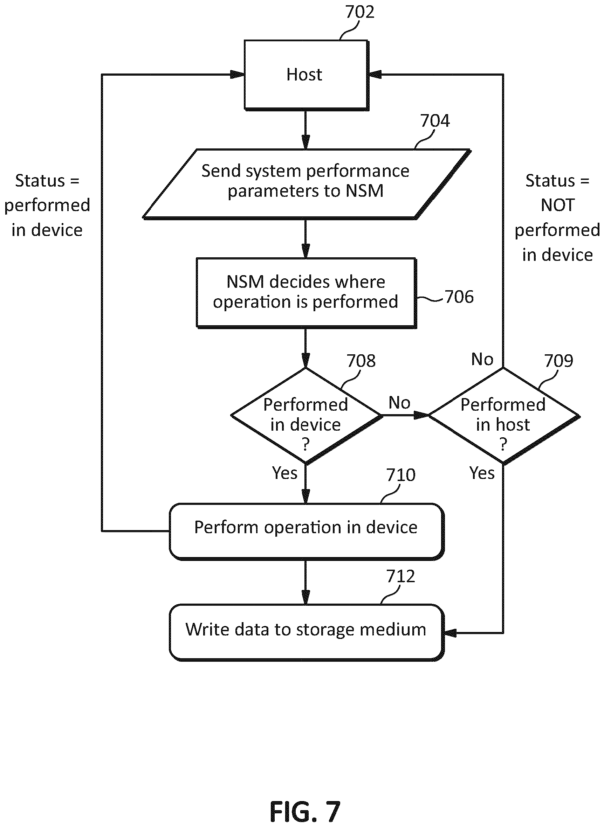

Fig. 7 illustrates an example embodiment of a method for a host to track a write operation with near storage decompression in accordance with example embodiments of the disclosure.

For purposes of illustration, the embodiment illustrated in Fig. 7 may be described in the context of the system illustrated in Fig. 1. However, the embodiment illustrated in Fig. 7 may be implemented with any suitable system, apparatus, and/or devices including any of those disclosed herein. For purposes of illustration, the embodiment illustrated in Fig. 7 may be described in the context of an adaptive computational storage device 104 that may be configured to compress and/or decompress data received from and/or sent to the host 102, respectively, but the method may be applied to any other operation that may be performed by a computational storage device. In this example embodiment, the method illustrated in Fig. 7 may be performed, for example, from a point of view of the host 102.

The method may be initiated by the host 102 at operation 702, for example, by sending a write request to an adaptive computational storage device 104. At operation 704, the host 102 may send information about one or more system performance parameters to the NSM logic 114 at the storage device 104. For example, the information may be in the form of a monitor score. At operation 706, the NSM logic 114 may decide whether to perform a compression operation associated with the write request at the storage device 104.

At operation 708, if the NSM logic 114 decides to perform the compression operation at the storage device 104, the method may proceed to operation 710 where the storage device may perform the data compression operation and return a status value indicating that the compression operation was completed at the storage device 104. The method may then proceed to operation 712 where the storage device 104 may write the compressed data in the storage medium 110 of the storage device 104.

Referring again to operation 708, if the NSM logic 114 decides not to perform the compression operation at the storage device 104, the method may proceed to operation 709 at which the NSM logic 114 may determine whether the data was already compressed by the host 102. If the NSM logic 114 determines that the host 102 has not compressed the data, the storage device 104 may return a status value indicating that the compression operation was not performed at the storage device 104 and proceed to operation 702. In some embodiments, this status may essentially function as an error message indicating that the write data was not compressed by the host 102 or the storage device 104. However, if the NSM logic 114 determines, at operation 709, that the host 102 has already compressed the data, the method may proceed to operation 712 where the storage device 104 may write the compressed data in the storage medium 110 of the storage device 104.

In some embodiments, one or more database operations may be implemented with adaptive near storage computation in accordance with example embodiments of the disclosure. For example, in some embodiments, a host may attempt to offload the calculation of a cost function to an adaptive computational storage device. A cost function may be used by a database optimizer (e.g., running at a host) to create a database query plan. Examples of parameters that may be considered as part of a cost function may include: (1) a choice of one or more access paths (e.g., determining a way to access a table such as through indexing, performing a full table scan, and/or the like); (2) a choice of one or more join orders (e.g., determining an order in which pairs of tables may be joined); and/or (3) a choice of one or more join methods (e.g., determining a type of joint operation such as outer join, inner join, left join, and/or the like). In some embodiments, an adaptive computational storage device may decide whether to perform a cost function calculation and/or make one or more of these choices at the storage device or at the host based, for example, on a local score for the device and/or a monitor score for a system.

In some embodiments, a database optimizer use near storage computation resources (e.g., operation logic 112 as shown in Fig. 1) and/or an NSM (e.g., NSM logic 114 as shown in Fig. 1) to implement a cost function for selecting a query plan (e.g., an optimized query plan). For example, in some embodiments, a choice of location to perform a full table scan may be offloaded to an adaptive computational storage device. Thus, an NSM at the storage device may decide at execution time whether to perform a conditional scan at the storage device or at the host. As another example, in some embodiments, a choice of location to perform partial aggregates may be offloaded to an adaptive computational storage device. Thus, an NSM at the storage device may select one or more aggregates at execution time. As a further example, in some embodiments, a choice of one or more join methods may be offloaded to an adaptive computational storage device. Thus, a plan may indicate a near storage broadcast join may be decided at execution time, based, for example, on system and/or device loads, the final size of the table and/or result to be broadcast, and/or the like.

In some embodiments, one or more of the following performance parameters may be used by a cost function to determine one or more operations to be offloaded to an adaptive computational storage device: one or more near storage operational capabilities (e.g., computation speed, memory resource size, and/or the like); bus and/or network capabilities (e.g., latency, bandwidth, bisection width and/or the like); and/or overall query plan complexity. (E.g., if a plan is CPU heavy, it may be beneficial to attempt to offload one or more operations to an adaptive computational storage device.)

In some embodiments, deciding whether to perform a database operation at a computational storage device may involve one or more tradeoffs between various performance parameters. For example, in an embodiment in which a merchant may query a database to find yellow shirts that may be in inventory, a filter operation may be offloaded and included in a scan operation at a storage device. In such an operation, instead of returning all rows to the host from the scan operation, the filter operation may return only filtered rows including yellow shirts to the host. Thus, network traffic may be reduced because less data may be returned to the host. However, a cost function may implement selectivity based, for example, on the number of items that may satisfy a filter criteria (which may also be referred to as a filter selectivity ratio.) For example, if the merchant has many types of a different item (e.g., instant coffee) in inventory, it may not be beneficial to offload a filter for coffee types to the storage device because, in some embodiments, the host may have more powerful processing resources than the storage device. Therefore, the ability to use the more powerful processing resources of the host may outweigh the additional network traffic. Thus, in some embodiments, an NSM may implement an evaluation function that may involve making one or more tradeoffs between performance parameters (e.g., by weighting one or more performance parameters).

A host may perform heterogeneous scheduling by taking into consideration computing units and/or other devices with different performance characteristics such as GPUs, compute units in FPGAs, CPUs with different speeds (e.g., in a distributed system), computational storage devices and/or the like. In some embodiments, heterogeneous scheduling may be integrated with adaptive near storage computation in accordance with example embodiments of the disclosure. For example, in some embodiments, a host scheduler may perform heterogeneous scheduling based at least in part on the presence of an NSM when scheduling tasks for CPUs, GPUs, computational storage devices (e.g., using a status such as ALWAYS, NEVER, and/or ADAPT), and/or the like. As a further example, in some embodiments, an NSM may include functionality to implement decisions other than binary decisions that may have only two options. An example of a non-binary decision, an NSM may include functionality to reorder multiple requests it may receive based on one or more conditions of the storage apparatus such as performance parameters, power parameters, priorities, and/or the like. As a further example of integrating heterogeneous scheduling with adaptive near storage computation, a host may determine a monitor score to send to an NSM based at least in part on coordinating heterogeneous scheduling one or more other system components. In some embodiments, this may improve the efficiency of an NSM.

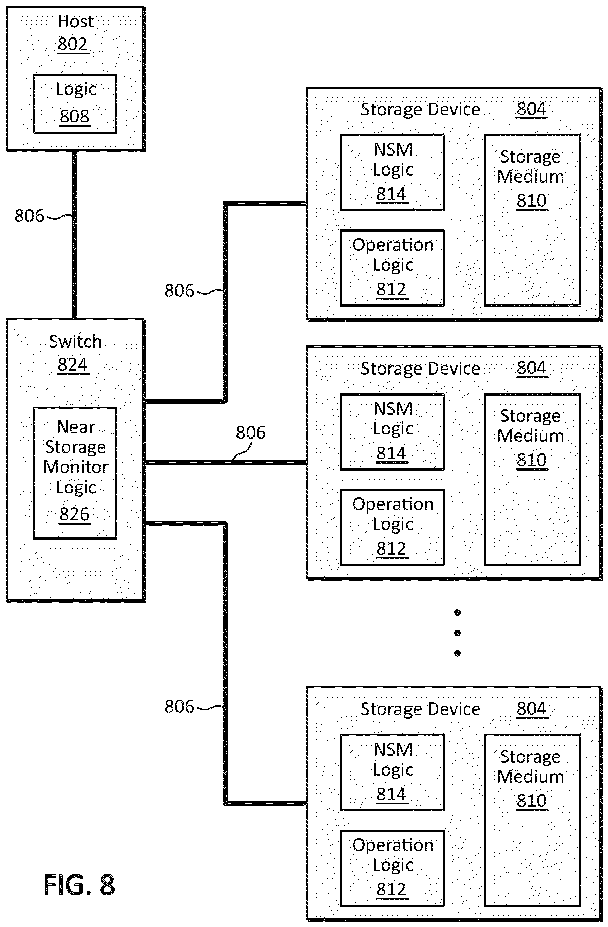

Fig. 8 illustrates an embodiment of a system having a switch and multiple adaptive computational storage devices in accordance with example embodiments of the disclosure. The embodiment illustrated in Fig. 8 may include a host 802 and multiple storage devices 804. A switch 824 may be located between the host 802 and the storage devices 804 to control the flow of data between the host 802 and the storage devices 804 over bus segments 806. In some embodiments, the host 802, storage devices 804, and bus segments 806 may be implemented in a manner similar to those described above with respect to Figs. 1 and 2. For example, each of the storage devices 804 may include NSM logic 814 and operation logic 812.

The switch 824 may include NSM logic 826 that may implement some or all of the functionality of the NSM logic 814 of one or more of the storage devices 804. Additionally, or alternatively, the NSM logic 826 at the switch 824 may implement additional functionality for managing adaptive near storage computations for one or more of the storage devices 804. For example, in some embodiments, the NSM logic 826 at the switch 824 may update a status and/or a monitor score from the host 802 before sending it to one or more of the storage devices 804. The NSM logic 826 may update a status and/or monitor score, for example, by changing the status and/or monitor score based on one or more system performance parameters that may be visible to the switch due to its connection to multiple storage devices 804.

In some embodiments, the NSM logic 826 at the switch 824 may work collaboratively with the NSM logic 814 of one or more of the storage devices 804. In some embodiments, the NSM logic 826 at the switch 824 may override the NSM logic 814 of one or more of the storage devices 804. In some embodiments, one or more actions taken by the NSM logic 826 at the switch 824 may be transparent to the NSM logic 814 of one or more of the storage devices 804. For example, in some embodiments, the NSM logic 826 at the switch 824 may intercept and change a monitor score from the host 802 before sending the changed monitor score to one or more of the storage devices 804, which may process a request associated with the updated score as if the updated score came directly from the host 802.

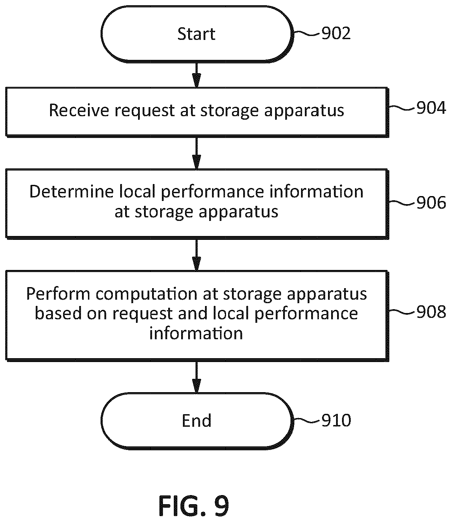

Fig. 9 illustrates an embodiment of an adaptive near storage computation method in accordance with example embodiments of the disclosure. The method illustrated in Fig. 9 may be implemented, for example, using any of the apparatus illustrated in Fig. 1, Fig. 2, and/or Fig. 8. The method may begin at operation 902. At operation 904, the method may receive a request at a storage apparatus. In some embodiments, the request may include a storage access request and/or a request to perform an operation such as a computation. At operation 906, the method may determine local performance information at the storage apparatus. In some embodiments, the local performance information may include CPU usage, memory usage, queue usage, I/O loads, network traffic loads, and/or the like. At operation 908, the method may perform a computation at the storage apparatus based on the request and the local performance information. In some embodiments, the method may further include performing the computation based on system performance information received at the storage apparatus. The method may end at operation 910.

The embodiment illustrated in Fig. 9, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to an integrated circuit may refer to all or only a portion of the integrated circuit, and a reference to a block may refer to the entire block or one or more subblocks. The use of terms such as "first" and "second" in this disclosure and the claims may only be for purposes of distinguishing the things they modify and may not indicate any spatial or temporal order unless apparent otherwise from context. In some embodiments, a reference to a thing may refer to at least a portion of the thing, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner.

## Claims

1. A method for adaptive near storage computation comprising:
receiving (904), from a host (102, 502, 602, 702, 802) of a system (100), a request at a storage apparatus;
determining (906) local performance information at the storage apparatus; and
performing (908) an operation at the storage apparatus based on the request and the local performance information;
receiving system performance information at the storage apparatus, wherein performing the operation at the storage apparatus is further based on the system performance information, wherein the system performance information is information on one or more performance parameters of the system (100), such as host CPU load, host memory load or system priorities; and
generating updated system performance information by changing the system performance information, wherein performing the operation at the storage apparatus is based on the updated system performance information, and
wherein:
the storage apparatus comprises a switch (824) and a storage device (104, 204, 504, 804) of the system (100);
generating the updated system performance information comprises generating the updated system performance information at the switch (824);
performing the operation at the storage apparatus comprises performing the operation at the storage device (104, 204, 504, 804); and
the switch (824) is located between the host (102, 502, 602, 702, 802) and the storage device (104, 204, 504, 804) to control the flow of data between the host and the storage devices over bus segments (806).

2. The method of claim 1, wherein performing the operation at the storage apparatus is further based on a threshold.

3. The method of claim 1, further comprising:
receiving, from the host (102, 502, 602, 702, 802), a status at the storage apparatus;
wherein performing the operation at the storage apparatus is further based on the status.

4. The method of claim 1, wherein the request comprises a first request, the method further comprising:
receiving a second request at the storage apparatus; and
reordering the first request and the second request based on a condition of the storage apparatus.

5. The method of claim 1, wherein:
the request comprises a write request; and
performing the operation at the storage apparatus is further based on data received with the write request.

6. The method of claim 1, wherein performing the operation at the storage apparatus is further based on a change in the local performance information.

7. The method of claim 1, wherein the local performance information is based on a queue (220) at the storage apparatus, wherein the queue is checked for the number of read and/or write requests that may be pending as a measure of how busy the storage device (104, 204, 504, 804) is.

8. The method of claim 1, wherein the local performance information is based on:
a first parameter having a first weight; and
a second parameter having a second weight.

9. The method of claim 1, wherein the system performance information is based on at least one of: a central processing unit, CPU, usage, a memory usage, a process, a priority for a process, a swap space usage, an input and/or output (I/O) statistic, an I/O wait time, a network traffic bandwidth used by one or more processes, a network protocol monitor, a process running on a port, a database statistic of a server, or network traffic activity.

10. A storage apparatus for adaptive near storage computation comprising:
a storage medium (110, 210);
operation logic (112, 212, 812) configured to perform an operation on data received at the storage apparatus; and
near storage monitor, NSM, logic (114, 214, 814) configured to:
determine local performance information for the storage apparatus; and
control the operation logic (112, 212, 812) based on the local performance information and a request received from a host (102, 502, 602, 702, 802) of a system (100) at the storage apparatus;
wherein the storage apparatus is further configured to:
receive system performance information, wherein performing the operation is further based on the system performance information, and wherein the system performance information is information on one or more performance parameters of the system (100), such as host CPU load, host memory load or system priorities; and
generate updated system performance information by changing the system performance information, wherein performing the operation is based on the updated system performance information, and
wherein:
the storage apparatus comprises a switch (824) and a storage device (104, 204, 504, 804) of the system (100);
generating the updated system performance information comprises generating the updated system performance information at the switch (824);
performing the operation at the storage apparatus comprises performing the operation at the storage device (104, 204, 504, 804); and
the switch (824) is located between the host (102, 502, 602, 702, 802) and the storage device (104, 204, 504, 804) to control the flow of data between the host and the storage devices over bus segments (806).

11. The storage apparatus of claim 10, wherein the NSM logic (114, 214, 814) is further configured to control the operation logic (112, 212, 812) based on the system performance information received at the storage apparatus.

12. The storage apparatus of claim 10, wherein the NSM logic (114, 214, 814) is further configured to control the operation logic (112, 212, 812) based on a status received from the host (102, 502, 602, 702, 802) at the storage apparatus.

## Patentansprüche

1. Ein Verfahren für adaptive Nahspeicherberechnung, das aufweist:
Empfangen (904), von einem Host (102, 502, 602, 702, 802) eines Systems (100), einer Anforderung an eine Speichervorrichtung;
Bestimmen (906) lokaler Leistungsinformationen an der Speichervorrichtung; und
Ausführen (908) einer Operation an der Speichervorrichtung basierend auf der Anforderung und den lokalen Leistungsinformationen;
Empfangen von Systemleistungsinformationen an der Speichervorrichtung, wobei Ausführen der Operation an der Speichervorrichtung ferner auf den Systemleistungsinformationen basiert, wobei die Systemleistungsinformationen Informationen über einen oder mehrere Leistungsparameter des Systems (100) sind, wie Host-CPU-Last, Host-Speicherlast oder Systemprioritäten; und
Erzeugen aktualisierter Systemleistungsinformationen durch Ändern der Systemleistungsinformationen, wobei Ausführen der Operation an der Speichervorrichtung auf den aktualisierten Systemleistungsinformationen basiert, und
wobei:
die Speichervorrichtung einen Switch (824) und eine Speichervorrichtung (104, 204, 504, 804) des Systems (100) aufweist;
Erzeugen der aktualisierten Systemleistungsinformationen Erzeugen der aktualisierten Systemleistungsinformationen an dem Switch (824) aufweist;
Ausführen der Operation an der Speichervorrichtung Ausführen der Operation an der Speichervorrichtung (104, 204, 504, 804) aufweist; und
der Switch (824) sich zwischen dem Host (102, 502, 602, 702, 802) und der Speichervorrichtung (104, 204, 504, 804) befindet, um den Datenfluss zwischen dem Host und den Speichervorrichtungen über Bussegmente (806) zu steuern.

2. Verfahren nach Anspruch 1, wobei Ausführen der Operation an der Speichervorrichtung ferner auf einem Schwellenwert basiert.

3. Verfahren nach Anspruch 1, ferner aufweisend:
Empfangen, von dem Host (102, 502, 602, 702, 802), eines Status an der Speichervorrichtung;
wobei Ausführen der Operation an der Speichervorrichtung ferner auf dem Status basiert.

4. Verfahren nach Anspruch 1, wobei die Anforderung eine erste Anforderung aufweist, wobei das Verfahren ferner umfasst:
Empfangen einer zweiten Anforderung an der Speichervorrichtung; und
Umordnen der ersten Anforderung und der zweiten Anforderung basierend auf einem Zustand der Speichervorrichtung.

5. Verfahren nach Anspruch 1, wobei:
die Anforderung eine Schreibanforderung aufweist; und
Ausführen der Operation an der Speichervorrichtung ferner auf mit der Schreibanforderung empfangenen Daten basiert.

6. Verfahren nach Anspruch 1, bei dem Ausführen der Operation in der Speichervorrichtung ferner auf einer Änderung der lokalen Leistungsinformationen basiert.

7. Verfahren nach Anspruch 1, wobei die lokalen Leistungsinformationen auf einer Warteschlange (220) an der Speichervorrichtung basieren, wobei die Warteschlange auf die Anzahl an Lese- und/oder Schreibanforderungen geprüft wird, die als Maß dafür anhängig sein können, wie ausgelastet die Speichervorrichtung (104, 204, 504, 804) ist.

8. Verfahren nach Anspruch 1, wobei die lokalen Leistungsinformationen basieren auf:
einem ersten Parameter, der eine erste Gewichtung aufweist; und
einem zweiten Parameter, der eine zweite Gewichtung aufweist.

9. Verfahren nach Anspruch 1, wobei die Systemleistungsinformationen mindestens auf einem der folgenden Parameter basieren: einer zentralen Verarbeitungseinheit (CPU), einer Speichernutzung, einem Prozess, einer Priorität für einen Prozess, einer Auslagerungsraumnutzung, einer Eingabe- und/oder Ausgabe-(E/A)-Statistik, einer E/A-Wartezeit, einer von einem oder mehreren Prozessen verwendeten Netzwerkverkehrsbandbreite, einem Netzwerkprotokollmonitor, einem auf einem Port laufenden Prozess, einer Datenbankstatistik eines Servers oder einer Netzwerkverkehrsaktivität.

10. Eine Speichervorrichtung für adaptive Nahspeicherberechnung, die Folgendes aufweist:
ein Speichermedium (110, 210);
eine Operationslogik (112, 212, 812), die so konfiguriert ist, dass sie eine Operation an Daten ausführt, die an der Speichervorrichtung empfangen werden; und
Nahspeicherüberwachung, NSM, -Logik (114, 214, 814), die so konfiguriert ist zum:
Bestimmen lokaler Leistungsinformationen für die Speichervorrichtung; und
Steuern der Operationslogik (112, 212, 812) basierend auf den lokalen Leistungsinformationen und einer von einem Host (102, 502, 602, 702, 802) eines Systems (100) an der Speichervorrichtung empfangenen Anforderung;
wobei die Speichervorrichtung ferner konfiguriert ist zum:
Empfangen von Systemleistungsinformationen, wobei Ausführen der Operation ferner auf den Systemleistungsinformationen basiert, und wobei die Systemleistungsinformationen Informationen über einen oder mehrere Leistungsparameter des Systems (100) sind, wie beispielsweise Host-CPU-Last, Host-Speicherlast oder Systemprioritäten; und
Erzeugen aktualisierter Systemleistungsinformationen durch Ändern der Systemleistungsinformationen, wobei Ausführen der Operation auf den aktualisierten Systemleistungsinformationen basiert, und
wobei:
die Speichereinrichtung einen Switch (824) und eine Speichervorrichtung (104, 204, 504, 804) des Systems (100) aufweist;
Erzeugen der aktualisierten Systemleistungsinformationen Erzeugen der aktualisierten Systemleistungsinformationen an dem Switch (824) aufweist;
Ausführen der Operation an der Speichervorrichtung Ausführen der Operation an der Speichervorrichtung (104, 204, 504, 804) aufweist; und
der Switch (824) sich zwischen dem Host (102, 502, 602, 702, 802) und der Speichervorrichtung (104, 204, 504, 804) befindet, um den Datenfluss zwischen dem Host und den Speichervorrichtungen über Bussegmente (806) zu steuern.

11. Speichervorrichtung nach Anspruch 10, wobei die NSM-Logik (114, 214, 814) ferner so konfiguriert ist, dass sie die Operationslogik (112, 212, 812) basierend auf den an der Speichervorrichtung empfangenen Systemleistungsinformationen steuert.

12. Speichervorrichtung nach Anspruch 10, wobei die NSM-Logik (114, 214, 814) ferner so konfiguriert ist, dass sie die Operationslogik (112, 212, 812) basierend auf einem von dem Host (102, 502, 602, 702, 802) an der Speichervorrichtung empfangenen Status steuert.

## Revendications

1. Procédé de calcul adaptatif de stockage proche comprenant:
la réception (904), depuis un hôte (102, 502, 602, 702, 802) d'un système (100), d'une demande au niveau d'un appareil de stockage;
la détermination (906) d'informations de performance locales au niveau de l'appareil de stockage; et
l'exécution (908) d'une opération au niveau de l'appareil de stockage sur la base de la demande et des informations de performance locales;
la réception d'informations de performance du système au niveau de l'appareil de stockage, l'exécution de l'opération au niveau de l'appareil de stockage étant en outre basée sur les informations de performance du système, les informations de performance du système étant des informations sur un ou plusieurs paramètres de performance du système (100), tels que la charge du processeur de l'hôte, la charge de la mémoire de l'hôte ou les priorités du système; et
la génération d'informations de performance du système actualisées en modifiant les informations de performance du système, l'exécution de l'opération au niveau de l'appareil de stockage étant basée sur les informations de performance du système actualisées, et
dans lequel:
l'appareil de stockage comprend un commutateur (824) et un dispositif de stockage (104, 204, 504, 804) du système (100);
la génération des informations de performance du système actualisées comprend la génération des informations de performance du système actualisées au niveau du commutateur (824);
l'exécution de l'opération au niveau de l'appareil de stockage comprend l'exécution de l'opération au niveau du dispositif de stockage (104, 204, 504, 804); et
le commutateur (824) est situé entre l'hôte (102, 502, 602, 702, 802) et le dispositif de stockage (104, 204, 504, 804) pour contrôler le flux de données entre l'hôte et les dispositifs de stockage via des segments de bus (806).

2. Procédé selon la revendication 1, dans lequel l'exécution de l'opération au niveau de l'appareil de stockage est en outre basée sur un seuil.

3. Procédé selon la revendication 1, comprenant en outre:
la réception, depuis l'hôte (102, 502, 602, 702, 802), d'un état au niveau de l'appareil de stockage;
l'exécution de l'opération au niveau de l'appareil de stockage étant en outre basée sur l'état.

4. Procédé selon la revendication 1, dans lequel la demande comprend une première demande, le procédé comprenant en outre:
la réception d'une deuxième demande au niveau de l'appareil de stockage; et
le réordonnancement de la première demande et de la deuxième demande sur la base d'une condition de l'appareil de stockage.

5. Procédé selon la revendication 1, dans lequel:
la demande comprend une demande d'écriture; et
l'exécution de l'opération au niveau de l'appareil de stockage est en outre basée sur des données reçues avec la demande d'écriture.

6. Procédé selon la revendication 1, dans lequel l'exécution de l'opération au niveau de l'appareil de stockage est en outre basée sur une modification des informations de performance locales.

7. Procédé selon la revendication 1, dans lequel les informations de performance locales sont basées sur une file d'attente (220) au niveau de l'appareil de stockage, la file d'attente étant vérifiée pour le nombre de demandes de lecture et/ou d'écriture pouvant être en attente comme mesure de l'occupation du dispositif de stockage (104, 204, 504, 804).

8. Procédé selon la revendication 1, dans lequel les informations de performance locales sont basées sur:
un premier paramètre ayant un premier poids; et
un deuxième paramètre ayant un deuxième poids.

9. Procédé selon la revendication 1, dans lequel les informations de performance du système sont basées sur au moins l'un des éléments suivants: une unité centrale de traitement, CPU, une utilisation de la mémoire, un processus, une priorité pour un processus, une utilisation de l'espace d'échange, une statistique d'entrée et/ou de sortie, E/S, un temps d'attente d'E/S, une bande passante de trafic réseau utilisée par un ou plusieurs processus, un moniteur de protocole réseau, un processus s'exécutant sur un port, une statistique de base de données d'un serveur ou une activité de trafic réseau.

10. Appareil de stockage pour un calcul adaptatif de stockage proche comprenant:
un support de stockage (110, 210);
une logique d'opération (112, 212, 812) configurée pour exécuter une opération sur des données reçues au niveau de l'appareil de stockage; et
une logique de surveillance de stockage proche, NSM, (114, 214, 814) configurée pour:
déterminer des informations de performance locales pour l'appareil de stockage; et
contrôler la logique d'opération (112, 212, 812) sur la base des informations de performance locales et d'une demande reçue d'un hôte (102, 502, 602, 702, 802) d'un système (100) au niveau de l'appareil de stockage;
dans lequel l'appareil de stockage est en outre configuré pour:
recevoir des informations de performance du système, l'exécution de l'opération étant en outre basée sur les informations de performance du système, et les informations de performance du système étant des informations sur un ou plusieurs paramètres de performance du système (100), tels que la charge du processeur de l'hôte, la charge de la mémoire de l'hôte ou les priorités du système; et
générer des informations de performance du système actualisées en modifiant les informations de performance du système, l'exécution de l'opération étant basée sur les informations de performance du système actualisées, et
dans lequel:
l'appareil de stockage comprend un commutateur (824) et un dispositif de stockage (104, 204, 504, 804) du système (100);
la génération des informations de performance du système actualisées comprend la génération des informations de performance du système actualisées au niveau du commutateur (824);
l'exécution de l'opération au niveau de l'appareil de stockage comprend l'exécution de l'opération au niveau du dispositif de stockage (104, 204, 504, 804); et
le commutateur (824) est situé entre l'hôte (102, 502, 602, 702, 802) et le dispositif de stockage (104, 204, 504, 804) pour contrôler le flux de données entre l'hôte et les dispositifs de stockage via des segments de bus (806).

11. Appareil de stockage selon la revendication 10, dans lequel la logique NSM (114, 214, 814) est en outre configurée pour contrôler la logique d'opération (112, 212, 812) sur la base des informations de performance du système reçues au niveau de l'appareil de stockage.

12. Appareil de stockage selon la revendication 10, dans lequel la logique NSM (114, 214, 814) est en outre configurée pour contrôler la logique d'opération (112, 212, 812) sur la base d'un état reçu de l'hôte (102, 502, 602, 702, 802) au niveau de l'appareil de stockage.
